Europäisches Patentamt

(19) European Patent Office

Office européen des brevets

(11) Publication number: **0 148 287**
**B1**

(12) **EUROPEAN PATENT SPECIFICATION**

(45) Date of publication of patent specification: **27.04.88**

(21) Application number: **83630198.6**

(22) Date of filing: **05.12.83**

(51) Int. Cl.⁴: **F 16 G 11/10, B 65 D 77/18**

(54) **Lock for gripping cords or the like.**

(43) Date of publication of application:
**17.07.85 Bulletin 85/29**

(45) Publication of the grant of the patent:
**27.04.88 Bulletin 88/17**

(84) Designated Contracting States:
**DE FR GB IT SE**

(56) References cited:
**DE-C- 919 938**
**US-A- 697 710**
**US-A-1 456 712**
**US-A-1 498 699**
**US-A-1 517 449**
**US-A-1 526 606**
**US-A-3 413 691**
**US-A-4 300 269**
**US-A-4 424 609**

(73) Proprietor: **Boden, Ogden W.**
**1580 Gaywood Drive**
**Altadena California 91001 (US)**

(72) Inventor: **Boden, Ogden W.**
**1580 Gaywood Drive**
**Altadena California 91001 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to locking devices for releasably retaining one or more elongated flexible elements against longitudinal movement in a predetermined direction. The invention will be described primarily as applied to a device in which the retained element is a cord or pair of cords or cord ends, though it is to be understood that the invention in its broadest aspects is applicable to other types of flexible elements.

US—A—4 373 234 discloses a locking device according to the precharacterizing portion of claim 1 in which a gripping action on a belt or other elongated flexible element is attained by provision of a swinging locking assembly consisting of two parts which swing together relative to another member and which also are free for limited pivotal movement relative to one another in a final take-up or clamping action. A first of the parts of the swinging assembly may be considered as an actuating member which is manually operable pivotally between released and active positions, while the second of the two parts may be receivable about a portion of the actuating member in a manner causing the second part to move pivotally with the actuating member but giving it also the desired freedom for relative pivotal movement. Swinging movement of the actuating member then brings two clamping surface relatively toward one another to initially clamp the elongated flexible element against relative longitudinal movement, and further pivotal movement of the second part of the assembly relative to the actuating member tightens the gripping action.

A prior art locking device which has been in use for a number of years for retaining two cords or cord ends against longitudinal movement includes two metal parts which swing relative to one another between active cord gripping and released positions, with one of the parts having a loop projecting through a slit in the other part in the active locking condition for reception of the padlock, and with the two parts being cammed relative to one another to grip cords therebetween.

The present invention provides an improved locking device for gripping an elongated element or elements, and which in its preferred form is especially adapted for gripping two cords or cord ends, typically the opposite ends of a drawstring of a bag or the like. The device utilizes a two-part swinging locking assembly of the general type shown in US—A—4 373 234 already referred to but with improvements directed toward maximizing the gripping effectiveness when used as a cord lock, while at the same time attaining a very substantial load carrying capacity.

According to the characterizing portion of claim 1 this is achieved by improvements in the configuration of the surface or face against which the locking member of the two part swinging locking assembly presses the cords in their locking condition. That surface forms an essentially curving wall of the recess into which the locking member urges the cords. Also, the mentioned surface or face has a series of teeth which engage the cords in a relation increasing the resistance to longitudinal movement thereof in the locked condition of the parts, but with those teeth preferably being smaller than opposed teeth formed on the locking member itself.

During initial threading of the cords through the locking device, the two cords may be directed into properly spaced essentially parallel relation by reception within two spaced locating grooves or recesses formed in the locking member, and/or by a projection formed on a member of the device and projecting toward the locking member at a location between the two cords.

The actuating arm may be retained in its locking position by a detenting arrangement including a detent part projecting from one of the coacting members and engageable with a structure formed on the other member, with these detenting parts preferably being located between two guideways formed on one of the members and through which the cords extend. A loop for receiving a padlock and holding the parts in locked condition may project from one of the members and through a slit in the actuating member or arm, at a location between the axis of swinging movement of the parts and the detenting elements.

The locking device will now be described in greater detail with reference to the accompanying drawings, in which:

Fig. 1 is a plan view of a cord lock constructed in accordance with the invention;

Fig. 2 is a vertical section taken on line 2—2 of Fig. 1;

Fig. 3 is a fragmentary side elevational view taken on line 3—3 of Fig. 1;

Fig. 4 is an end elevational view taken on line 4—4 of Fig. 1;

Figs. 5 and 6 are vertical sections taken on line 5—5 and 6—6 respectively of Fig. 1;

Fig. 7 is an enlarged fragmentary view representing a portion of Fig. 2;

Figs. 8 and 9 are vertical sections taken on lines 8—8 and 9—9 of Fig. 1; and

Fig. 10 is a reduced fragmentary vertical section taken on line 10—10 of Fig. 7.

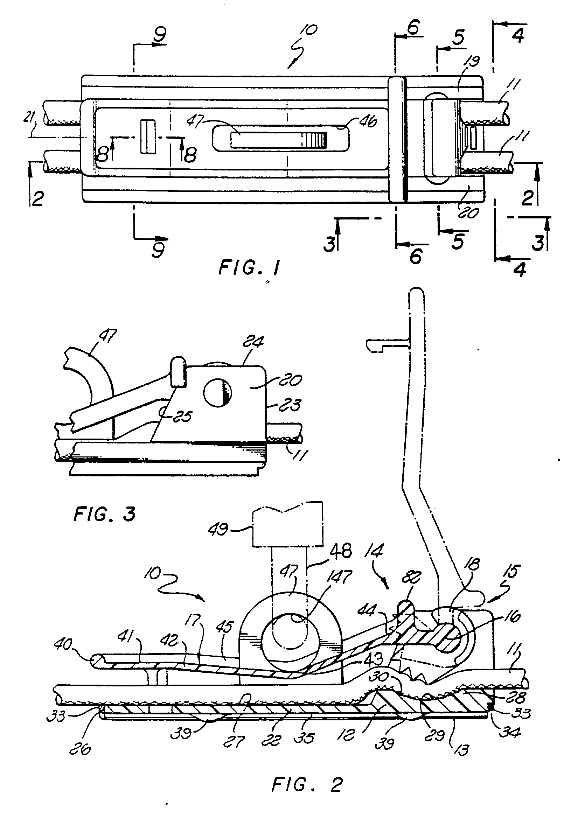

A locking device embodying the present invention is designated generally by the number 10 in the drawings, and is adapted to be utilized for preventing longitudinal movement of a pair of flexible cords 11, which may be either separate cords or opposite ends of a single drawstring of a mail bag, garment or the like. The device when it is locked conditions prevents movement of the cords in a rightward direction as viewed in Figs. 1 and 2.

The cord lock 10 includes a first part or member 12 having a label or card holding frame 13 at its underside as viewed in Fig. 2, and an assembly 14 connected to member 12 by a hinge structure 15 for relative pivotal movement about an axis 16 between the full line locking position of Fig. 2 and the broken line released position of that figure. Assembly 14 includes an actuating member 17 and a locking member 18 which is free for limited pivotal movement relative to member 17 and about axis 16.

Member 12 has, near its right end as viewed in Figs. 1 and 2, two opposite side walls 19 and 20 extending parallel to one another and to a central longitudinal plane 21. The device will be described in the present specification as positioned to have plane 21 and side walls 19 and 20 in vertically extending condition. Walls 19 and 20 project upwardly from opposite sides of a horizontal bottom wall 22 of member 12, and may be formed integrally therewith. As seen in Fig. 3, the two side walls 19 and 20 may be defined by directly vertical forward edges 23, horizontal top edges 24, and inclined rear edges 25, with the bottom wall 22 projecting leftwardly beyond these side walls to a transverse end 26 of the bottom wall. Cords 11 extend essentially parallel to one another in laterally spaced relation above bottom wall 22, and in the Fig. 2 position of the parts may rest on and be supported by a horizontal planar or upper surface 27 of bottom wall 22 except at the location of an upwardly projecting gripping portion 28 formed on body 12 at its right end. This portion 28 defines a recess 29 into which gripped portions of cords 11 are pressed downwardly by locking member 18 and against an essentially curving gripping surface or face 30 forming a wall of the recess. The precise configuration which is desirably given to gripping face 30 will be described in greater detail at a later point.

The label or card holder 13 is rectangular and extends along the periphery of member 12 at its underside, and has two parallel opposite side portions 31 received and secured within grooves 32 formed in the side edges of member 12, and two transverse end portions 33 received and secured within end grooves 34 in member 12. The card holding frame 13 may be secured to member 12 in any appropriate manner as by fusion bonding the upper surfaces of portions 32 and 33 of member 13 along their entire length to member 12 by ultrasonic welding.

The side portions 31 of card holder 13 project downwardly beneath the level of horizontal undersurface 35 of member 12 to form two flanges 36 defining guideways 37 within which the opposite edges of a card 38 are receivable, with a rounded projection or projections 39 of part 12 projecting downwardly in a relation engaging and slightly deforming the central portion of the card to frictionally retain it in the guideway formed between flanges 36. A name, address, or other identification can be printed on card 38 to identify the item to which cords 11 and the lock device 10 are attached.

The swinging actuating member 17 forms an arm which extends generally horizontally in the Fig. 2 locked position of the parts, and which is manually engageable as its leftward extremity 40 to swing member 17 in either direction between its full line and broken line positions. Member 17 may be considered as having a wall 41 which is generally horizontal in the Fig. 2 full line position of the parts, and more particularly which may extend first approximately directly horizontally from its left handle end to a location 42, then curve gradually downwardly to a location 43, and then advance back upwardly at an inclination from the location 43 to a point 44. Strengthening or stiffening ribs 45 may extend along and project upwardly a short distance from the opposite side edges of wall 41 of actuating member 17. At a central location, wall 41 of member 17 contains a slot 46 which is elongated essentially parallel to the main longitudinal axis 21 of member 12, and which in the Fig. 2 full line position of member 17 receives a padlock loop 47 formed integrally with an projecting upwardly from bottom wall 22 of member 12. Loop 47 contains an opening 147 adapted to receive the locking portion 48 of a padlock 49 at a location above actuating member 17 to lock member 17 in its Fig. 2 full line position and against upward cord releasing movement. The lowest portion 43 of wall 41 of actuating member 17 is located to engage portion 48 of the padlock in the locking condition of the parts. In that condition, the left end 40 of member 17 is spaced above bottom wall 22 of member 12 and above cords 11 to allow easy manual actuation of member 17 upwardly from the locking condition to released condition, as by manually grasping handle end 40 of member 17 and moving it upwardly or by inserting a user's thumb beneath end 40 and flipping it upwardly while holding the cords in the rest of the user's hand.

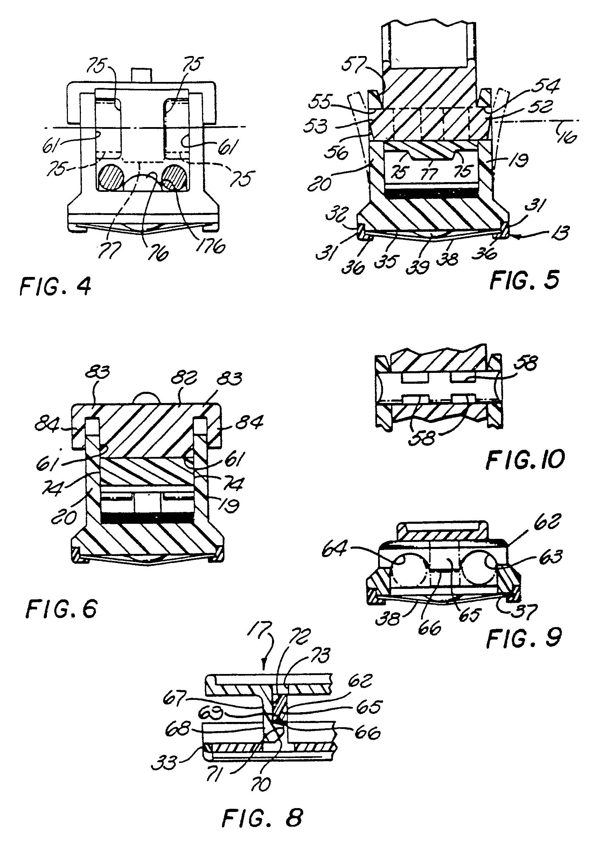

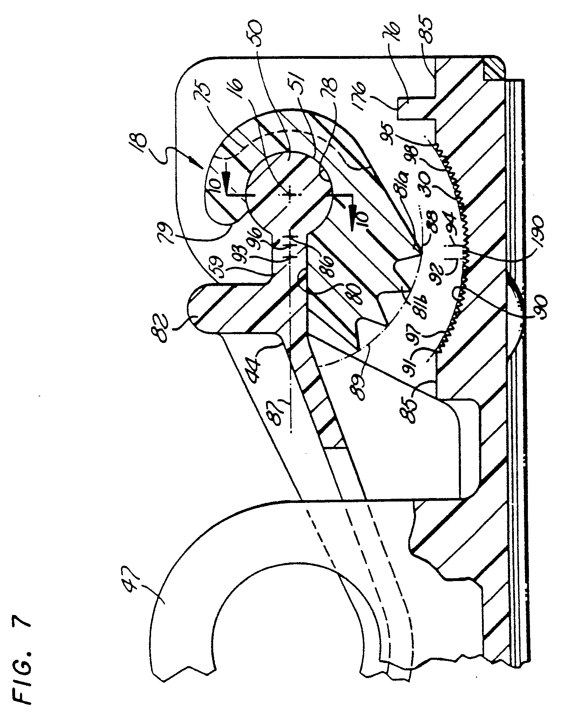

At its right end, member 17 has an externally cylindrical pivot pin portion 50 whose outer cylindrical surface 51 is centered about pivotal axis 16, and whose opposite ends 52 and 53 function as cylindrical pivot lugs projecting into corresponding cylindrical openings 54 and 55 in side walls 19 and 20 centered about axis 16 to effectively mount part 17 for its discussed swinging movement. Parts 12, 17, 18 and 13 are preferably all formed of an appropriate essentially stiff or rigid resinous plastic material adapted to effectively maintain the illustrated shape configuration but resiliently deformable during assembly to enable the parts to be snapped together. With regard to assembly of parts 12 and 17 in particular, the part 17 during assembly is adapted to be forced downwardly between side walls 19 and 20 and to cam those side walls relatively apart far enough to allow pivot lugs 52 and 53 to snap into openings 54 and 55 in the side walls to complete the desired hinge connection For this purpose, pivot lugs 52 and 53 are so configured that, when member 17 is in the upwardly projecting position represented in broken lines in Fig. 2, which position is represented in full lines in Fig. 5, two downwardly and inwardly inclined semicircular cam surfaces 56 formed on the outer ends of pivot lugs 52 and 53 are engageable with correspondingly downwardly and inwardly inclined cam surfaces 57 formed at the inner sides of side walls 19 and 20 above openings 54 and 55 to deflect or cam walls 19 and 20 relatively apart as the cylindrical portion 50 of the member 17 is pushed downwardly (see broken line condition of Fig. 5), with those side walls then springing back by their own resilience to their initial vertical parallel condition when the pivot lug ends 52 and 53 of portion 50 reach a position of alignment with openings 54 and 55. The cylindrical external surface 51 of pivot pin or shaft portion 50 of part 17 may be continuous along the entire length of portion 50, or may be interrupted at locations typically represented at 58 for lightening purposes (Fig. 10). Extending between the cylindrical portion 50 of member 17 and the point 44, member 17 may have a portion 59 which is somewhat thicker than the discussed wall 41 of member 17 leftwardly of point 44, and which may be of a width to be closely received and confined between the inner parallel vertical surfaces 61 of side walls 19 and 20 to locate part 17 against movement along axis 16 relative to part 12.

Near its left end, member 12 has an upwardly projecting wall 62 (Figs. 8 and 9) which is molded to contain and form two guideway passages 63 and 64 dimensioned to receive and closely confine and locate cords 11 to position them in a desired laterally spaced relation at the left end of the device. Between these guideways 63 and 64, wall 62 has a detenting portion 65 with a horizontal undersurface 66 engageable with a detent lug or finger 67 projecting downwardly from and formed integrally with member 17. Lug 67 and portion 65 of wall 62 may have the cross section illustrated in Fig. 8 along the entire lateral extent of lug 67, and in particular lug 67 may have a camming rib or projection 68 extending along the lower edge portion of projection 67 and having an upper latching surface 69 inclined at a slight angle to the horizontal (preferably 10 degrees) and a lower inclined camming surface 70, with a vertical surface 71 extending therebetween. Upon downward swinging movement of member 17 toward the Fig. 2 full line position, cam surface 70 first engages an inclined camming edge 72 formed on portion 65 of member 12 to deflect lug 67 slightly leftwardly as it moves past edge 72 and ultimately reaches the full line position of Fig. 8 in which the resilience of projection 67 causes it to return rightwardly to that full line position for engagement of camming rib or hook 68 with the undersurface 66 of portion 65 of wall 62 to effectively detent or latch the member 17 in its full line position of Fig. 2 and against upward swinging movement from that position. The resilience of projection 67 is however such that if member 17 is manually forced upwardly relative to member 12, the engagement of the inclined upper surface 69 of rib 68 with the undersurface of detenting wall 62 will cam projection 67 leftwardly in a manner enabling the projection to move upwardly past wall 62 for swinging movement of member 17 to its broken line position of Fig. 2. A slit 73 may be formed in member 17 at the location of detenting lug or projection 67 to facilitate formation of that detenting projection in an injection molding process.

Locking element 18 like the other parts is preferably formed of essentially stiff but slightly resiliently deformable resinous plastic material, and is configured to slide axially onto and be carried by the cylindrical pivot pin portion 50 of member 17. Part 18 may extend the entire distance between the inner parallel surfaces 61 of side walls 19 and 20 of member 12, and may have parallel vertical end surfaces 74 engageable with surfaces 61 to effectively located locking element 18 against movement along axis 16. Element 18 may have the configuration illustrated in Fig. 7 through the entire axial extent of element 18 between side walls 19 and 20, except at the location of two spaced grooves 75 which extend arcuately about axis 16 and may have the sectional configuration illustrated in Fig. 5. These grooves 75 are located symmetrically with respect to central vertical plane 21 of the device, at opposite sides thereof, and are so positioned as to receive upper portions of the two cords 11 when member 17 is in the upwardly projecting position represented in broken lines in Fig. 2 and in full lines in Fig. 5 (see also broken line position represented at 75 in Fig. 4). A projection 76 formed integrally with and projecting upwardly from bottom wall 22 of member 12 is located generally opposite the arcuate portion 77 of element 18 formed between the two grooves 75, to coact with those grooves in defining passageways at opposite sides of lug 76 and portion 77 within which the two cords are received. Lug 76 may have an upper semicircularly curved edge 176 engageable with the cords to hold them in spaced relation. Such retention of the cords by lug 76 and portion 77 of element 18 in positions near the two side walls 19 and 20 of part 12 minimizes the internal stresses which are developed in portion 28 of member 12 when the cords are under tension.

Element 18 has an internal cylindrically curving surface 78 which corresponds to and is a close fit about external cylindrical surface 51 of pivot pin portion 50 of member 17, to mount part 18 for pivotal movement relative to part 17 about axis 16 through a very limited angle (preferably 45°) determined by the width arcuately about axis 16 of a gap formed between two edges 79 and 80 of part 18. As will be understood, element 18 can swing relative to part 17 between a position in which the undersurface of portion 59 of member 17 engages edge 80 of element 18 (full lines in Figs. 2 and 7) and a position in which the upper surface of portion 59 engages upper edge 79 of the gap in element 18. At its underside, element 18 has a series of gripping teeth 81, which are movable between the broken line released position of Fig. 2 and the full line cord gripping position of that figure. These teeth extend parallel to the pivotal axis 16 of parts 17 and 18 and in the locking position are received opposite the gripping face 30 formed in the upper side of member 12.

At the left end of portion 59 of member 17, that member has an upwardly projecting wall 82 which may extend directly vertically in the full line position of Fig. 2 and which may have the vertical cross section illustrated in Fig. 6 to define portions 83 extending laterally above the upper edges of side walls 19 and 20 and portions 84 projecting downwardly at the outer sides of those side walls to block unwanted forced spreading of walls 19 and 20 relatively apart to attain the anti-tampering effect disclosed in US—A—4,300,269. In the upwardly projecting position of member 17 illustrated in broken lines in Fig. 2, the outer downwardly projecting flanges or lugs 84 on member 17 are located entirely above the upper edges of side walls 19 and 20 and do not interfere with spreading movement of those side walls as member 17 is snapped downwardly to its assembled condition between those walls. As member 17 is swung downwardly from its broken line position to its full line position of Fig. 2, lugs 84 move to positions at the outside of the two side walls 19 and 20 to confine those walls against spreading movement. If the walls 19 and 20 are forced apart in the Fig. 2 condition, this action will necessarily result in breakage of projections 84 and indicate to a subsequent user that the device has been violated.

Referring now to Fig. 7, the teeth 81 formed on the underside of locking member 18 and the opposed toothed gripping face 30 of member 12 are preferably of uniform cross section transversely of axis 16 through the entire axial extent between side walls 19 and 20. Further, the vertical cross section of the remainder of the gripping portion 28 of member 12, forwardly and rearwardly of the toothed gripping face 30, is uniform along the entire axial distance between walls 19 and 20 except at the location of the previously discussed cord separating lug 76 on member 12. More particularly, except at the location of that lug, the upper surfaces 85 of portion 28 of member 12 may be horizontal, with the curved gripping face 30 being recessed downwardly beneath the level of those horizontal surfaces 85.

The different teeth 81 of locking member 18 are not centered about the pivotal axis 16 and are not a uniform radial distance from that axis. Instead, these teeth are tered about a second axis 86, which is parallel to but spaced laterally from axis 16 and which in the Fig. 2 full line position of the parts is offset directly leftwardly from axis 16 and in the same horizontal plane 87 as that axis. The peaks 88 of the different teeth 81 thus follow or define the curving pattern 89 represented in Fig. 7 extending about axis 86 and eccentrically with respect to main pivotal axis 16. The circularly leading one of the teeth 81, designated as tooth 81a in Fig. 7, is thus substantially closer to pivotal axis 16 than in the next successive tooth 81b, with the succeeding teeth advancing progressively farther away from axis 16.

The teeth 90 of gripping face 30 of part 12, and the face defined by those teeth, are also arranged in a pattern which is curved essentially arcuately but not centered with respect to pivotal axis 16. These teeth 90 are preferably smaller than teeth 81 of locking member 18, so that the radial dimension of teeth 90 is less than the radial dimension of teeth 81, and the circular spacing between successive teeth 90 is less than the circular spacing between successive teeth 81. Teeth 90 are arranged on a radius greater than teeth 81 are, and are centered about an axis or axes 93, 96 spaced essentially parallel to and offset from pivotal axis 16 and the axis 86 of teeth 81. Preferably, the axis of axes 92, 96 about which teeth 90 are centered is or are farther from the pivotal axis 16 than is the axis 86 of the teeth 81. In the preferred arrangement, a first series of the teeth 90, between the locations 91 and 92 of Fig. 7, are centered about an axis 93 which is parallel to and offset leftwardly from pivotal axis 16, while a second series of teeth 90 between locations 94 and 95 may be centered about a different axis 96 which is slightly closer to axis 16 than is axis 93, but is slightly farther from axis 16 than is axis 86. In the Fig. 2 full line position of the parts, all of these axes 16, 86, 93 and 96 are parallel to one another and lie in the common horizontal plane 87 of Fig. 7. Between the locations 92 and 94, the teeth 90 may be considered as having no effective curvature about either of the axes 93 and 96, so that in effect a line 190 joining the peaks of teeth 90 between those locations 92 and 94 may extend directly horizontally and parallel to plane 87. The curved pattern defined by the peaks of teeth 90 between the locations 91 and 92 (centered about axis 93) is indicated at 97 in Fig. 7, and the curved pattern defined by the teeth 90 between the locations 94 and 95 and about axis 96 is represented at 98.

In initially placing the assembled device in use, member 17 may be swung upwardly about axis 16 relative to member 12 to the broken line position of Fig. 2, with corresponding swinging movement of the connected element 18 to its broken line position of the figure, enabling insertion of cords 11 leftwardly through the gap formed vertically between element 18 and the upwardly facing toothed gripping portion 28 of member 12. Grooves 75 in locking member 18 and the intermediate increased diameter portion 77 of that part, coacting with the upwardly projecting lug 76 of member 12, form guideways into which the two cords may be easily inserted for threading between the parts. The cords are advanced leftwardly along the upper surface of member 12 and through the guideways 63 and 64 formed in structure 62 to maintain them in located parallel relation as they project leftwardly beyond the locking device. After the cords have been inserted in this manner, actuating member 17 can be swung downwardly from its broken line position of Fig. 2 to its full line position of that figure, with portion 59 of member 17 engaging edge 80 of member 18 and causing it to swing from its broken line position of Fig. 2 to its full line position of Figs. 2 and 7 bringing teeth 81 into engagement with the cords and thereby clamping the cords into the recess formed by gripping face 30 and against the curved series of teeth 90 in that process. Subsequent exertion of rightward longitudinal force on the cords tends to cause counterclockwise pivotal movement of member 18 relative to member 17 and about axis 16, which pivotal movement acts by virtue of the eccentric configuration of both the teeth 81 of member 17 and the teeth 90 of member 12 to move the teeth 81 progressively closer to teeth 90 and thereby grip the cords progressively more tightly. An automatic tightening action is thus attained, effectively and very positively preventing rightward withdrawal of the cords from between the two gripping surfaces. The above discussed specifically defined configuration of those toothed surfaces optimizes the gripping action. During the final portion of the downward swinging movement of the actuating member 17, detenting lug 67 on part 17 is deflected by portion 65 of wall 62 and then returns to a position releasably retaining member 17 in its locking position of Fig. 2. The parts 17 and 12 are retained in their locking condition by insertion of the hasp 48 of padlock 49 through loop 47 at a location above actuating arm 17. The unique recessed and curved configuration of the toothed gripping face 30 of member 12, in conjunction with teeth 81 of element 18, has the effect of maximizing the resistance offered to rightward movement of the cords in the locked condition of the device, and at the same time causing the internal stresses in member 12 to be taken primarily by its lower heavy portion 28 with minimum internal stresses in walls 19 and 20.

**Claims**

1. Device for retaining an elongated element (11) against longitudinal movement comprising a first member (12), an actuating member (17) mounted to swing essentially about a first axis (16) relative to said first member (12) between locking and released positions, and a locking member (18) connected to the actuating member (17) for swinging movement therewith and for limited pivotal movement relative thereto about said first axis (16), said locking member (18) having a gripping portion with teeth (81) distributed arcuately about a second axis (86) which is essentially parallel to but offset from said first axis (16) for pressing said element against a recessed gripping surface (30) of said first member (12), said gripping surface (30) advancing progressively toward said first axis (16) as it advances about this axis in the direction in which the locking member (18) pivots relative to the actuating member (17) to tighten the grip on said elongate element, characterized by said recessed gripping surface (30) being curved and having a series of teeth (90) against which said locking member (18) presses said element (11), said series of teeth (90) of said gripping surface (30) of said first member (12) being distributed arcuately about a third axis (93) which is essentially parallel to and offset from said first and second axes (16, 86).

2. Device according to claim 1, characterized in that said third axis (93) is farther from said first axis (16) than in said second axis (86).

3. Device according to claim 1, characterized in that said gripping surface (30) of said first member (12) has a further series of teeth (90) distributed arcuately about a fourth axis (96) essentially parallel to and offset from all of said first, second and third axes (16, 86, 93).

4. Device according to claim 3, characterized in that said second axis (86) is essentially between said first axis and said third and fourth axes (16, 93, 96).

5. Device according to any of the preceding claims, characterized in that said teeth (81) of said gripping portion of said locking member (18) are spaced farther apart than are the teeth of said gripping surface (30) of said first member (12).

6. Device according to any one of the preceding claims, characterized in that said first member (12) has a projection (76) extending generally toward said locking member (18) near an end of said gripping surface (30) on said first member (12) to be received between two of said elongated elements (11).

7. Device according to claim 6, characterized in that said locking member (18) has two recesses (75) formed therein at axially spaced locations and at essentially opposite sides of said projection (76) for guiding said two elongated elements (11) to spaced positions between said locking member (18) and said first member (12).

8. Device according to any of the preceding claims, characterized by two spaced guideways (63, 64) on said first member (12) for guiding and locating two of said elongated elements (11) in spaced relation at a location offset longitudinally of the elements (11) from said gripping surface (30), and detenting means (67) on said actuating member (17) engageable with said first member (12) at a location laterally between said guideways (63, 64) to retain said actuating member (17) in said locking position.

9. Device according to claim 3 or 4, characterized in that said gripping surface (30) of said first member (12 has a plurality of teeth (190) between said first mentioned and said further series of teeth (90) of the gripping surface (30) and which are not disposed arcuately about either of said third or fourth axes (93, 96) but are distributed along an essentially straight line between said first mentioned and said further series of teeth (90).

10. Device according to any one of claims 1 to 9, characterized in that the series of teeth (90) of said recessed gripping surface (30) are smaller than the teeth (81) of said locking member (18).

**Patentansprüche**

1. Vorrichtung zum Festhalten eines langgestreckten Elements (11) gegen Längsbewegung, mit einem ersten Teil (12), mit einem Betätigungsteil (17), das so befestigt ist, daß es im wesentlichen um eine erste Achse (16) relativ zu dem ersten Teil (12) zwischen einer Sperr- und einer gelösten Stellung schwenkbar ist, und mit einem Sperrteil (18), das mit dem Betätigungsteil (17) verbunden ist zur Schwenkbewegung mit diesem und zur begrenzten Drehbewegung relativ zu diesem um die erste Achse (16), wobei das Sperrteil (18) einen Spannteil mit Zähnen (81) hat, die bogenförmig um eine zweite Achse (86) verteilt sind, welche im wesentlichen parallel zu, aber versetzt von der ersten Achse (16) ist, um das Element gegen eine vertiefte Spannfläche (30) des ersten Teils (12) zu pressen, wobei die Spannfläche (30) sich fortschreitend zu der ersten Achse (16) hin ansteigt, wenn sie um diese Achse in der Richtung fortschreitet, in der sich das Sperrteil (18) relativ zu dem Betätigungsteil (17) dreht, um das langgestreckte Element fester einzuspannen, dadurch gekennzeichnet, daß die vertiefte Spannfläche (30) gekrümmt ist und eine Reihe von Zähnen (90) hat, gegen die das Sperrteil (18) das Element (11) preßt, wobei die Reihe von Zähnen (90) der Spannfläche (30) des ersten Teils (12) bogenförmig um eine dritte Achse (93) verteilt sind, welche im wesentlichen parallel zu und versetzt von der ersten und der zweiten Achse (16, 86) ist.

2. Vorrichtung nach Anspruch 1, dadurch gekennzeichnet, daß die dritte Achse (93) weiter von der ersten Achse (16) weg ist als die zweite Achse (86).

3. Vorrichtung nach Anspruch 1, dadurch gekennzeichnet, daß die Spannfläche (30) des ersten Teils (12) eine weitere Reihe von Zähnen (90) hat, die bogenförmig um eine vierte Achse (96) verteilt sind, welche im wesentlichen parallel zu und versetzt von der ersten, der zweiten und der dritten Achse (16, 86, 93) ist.

4. Vorrichtung nach Anspruch 3, dadurch gekennzeichnet, daß die zweite Achse (86) im wesentlichen zwischen der ersten Achse und der dritten und der vierten Achse (16, 93, 96) ist.

5. Vorrichtung nach einem der vorhergehenden Ansprüche, dadurch gekennzeichnet, daß die Zähne (81) des Spannteils des Sperrteils (18) größeren gegenseitigen Abstand als die Zähne der Spannfläche (30) des ersten Teils (12) haben.

6. Vorrichtung nach einem der vorhergehenden Ansprüche, dadurch gekennzeichnet, daß das erste Teil (12) einen Vorsprung (76) hat, der sich insgesamt zu dem Sperrteil (18) in der Nähe eines Endes der Spannfläche (30) an dem ersten Teil (12) erstreckt, um zwischen zwei langgestreckten Elementen (11) aufgenommen zu werden.

7. Vorrichtung nach Anspruch 6, dadurch gekennzeichnet, daß das Sperrteil (18) zwei Aussparungen (75) hat, welche in diesem an gegenseitigen axialen Abstand aufweisenden Stellen und auf im wesentlichen entgegengesetzten Seiten des Vorsprungs (76) gebildet sind, zum Führen der beiden langgestreckten Elemente (11) in gegenseitigen Abstand aufweisende Positionen zwischen dem Sperrteil (18) und dem ersten Teil (12).

8. Vorrichtung nach einem der vorhergehenden Ansprüche, gekennzeichnet durch zwei gegenseitigen Abstand aufweisenden Führungsbahnen (63, 64) an dem ersten Teil (12) zum Führen und Festlegen von zwei langgestreckten Elementen (11) in gegenseitigem Abstand an einer Stelle, die in Längsrichtung der Elemente (11) von der Spannfläche (30) versetzt ist, und durch eine Feststelleinrichtung (67) an dem Betätigungsteil (17), die mit dem ersten Teil (12) an einer Stelle quer zwischen den Führungsbahnen (63, 64) in Eingriff bringbar ist, um das Betätigungsteil (17) in der Sperrstellung zu halten.

9. Vorrichtung nach Anspruch 3 oder 4, dadurch gekennzeichnet, daß die Spannfläche (30) des ersten Teils (12) mehrere Zähne (190) zwischen der erstgenannten und der weiteren Reihe von Zähnen (90) der Spannfläche (30) hat, die nicht bogenförmig um die dritte oder die vierte Achse (93, 96) angeordnet, sondern längs einer im wesentlichen geraden Linie zwischen der erstgenannten und der weiteren Reihe von Zähnen (90) verteilt sind.

10. Vorrichtung nach einem der Ansprüche 1 bis 9, dadurch gekennzeichnet, daß die Zähne der Reihe von Zähnen (90) der vertieften Spannfläche (30) kleiner sind als die Zähne (81) des Sperrteils (18).

**Revendications**

1. Dispositif pour bloquer un élément de forme allongée (11) contre tout déplacement longitudinal, lequel comprend un premier organe ou organe de base (12), un organe d'actionnement (17) monté de façon à pivoter en substance autour d'un premier axe (16) entre des positions respectivement de blocage et de relâchement, et un organe de blocage (18) qui fait partie intégrante dudit organe d'actionnement (17), pouvant se déplacer par pivotement avec cet organe d'actionnement et aussi par rapport à celui-ci autour d'un premier axe (16), ledit organe de blocage (18) comportant une partie dite serrage munie de dents (81) réparties suivant un arc de cercle autour d'un second axe (86) sensiblement parallèle au premier axe (16) mais décalé par rapport à celui-ci, de façon à comprimer l'élément allongé (11) contre une surface de serrage en retrait (30) dudit premier organe (12), ladite surface de serrage (30) se rapprochant progressivement du premier axe (16) à mesure qu'elle progresse autour de cet axe dans le sens du pivotement de l'organe de blocage (18) par rapport à l'organe d'actionnement (17), afin de renforcer le serrage dudit élément allongé, ce dispositif étant caractérisé en ce que ladite surface de serrage en retrait (30) est incurvée et présente une série de dents (90) contre lesquelles ledit organe de blocage (18) comprise ledit élément allongé (11), ladite série de dents (90) de la surface de serrage (30) du premier organe (12) étant réparties en arc de cercle autour d'un troisième axe (93) sensiblement parallèle aux premier et second axes (16, 86), mais décalé par rapport à ceux-ci.

2. Dispositif selon la revendication 1, caractérisé en ce que ledit troisième axe (93) est plus éloigné du premier axe (16) que le second axe (86).

3. Dispositif selon la revendication 1, caractérisé en ce que ladite surface de serrage (30) du premier organe (12) comporte une autre série de dents (90) réparties en arc de cercle autour d'un quatrième axe (96) sensiblement parallèle à tous les premier, second et troisième axes précités (16, 86, 93) et décalé par rapport à ces derniers.

4. Dispositif selon la revendication 3, caractérisé en ce que le second axe (86) est situé en substance entre le premier axe (16) et lesdits troisième et quatrième axes (93, 96).

5. Dispositif selon l'une quelconque des revendications 1 à 4, caractérisé en ce que les dents (81) dudit organe de serrage (18) sont espacées entre elles suivant un pas plus quand que celui des dents de ladite surface de serrage (30) dudit premier organe (12).

6. Dispositif selon l'une quelconque des revendications 1 à 5, caractérisé en ce que ledit premier organe (12) présente une saillie en forme de bossage (76) orientée sensiblement vers ledit organe de blocage (18) à proximité d'une extrémité de ladite surface de serrage (30) formée sur ledit premier organe (12), ce bossage étant destiné à être logé entre deux desdits éléments allongés à bloquer (11).

7. Dispositif selon la revendication 6, caractérisé en ce que ledit organe de blocage (18) présente deux cavités (75) espacées entre elles de part et d'autre de l'axe longitudinal central et sensiblement de part et d'autre dudit bossage (76) afin de guider les deux éléments allongés (11) vers des positions espacées entre l'organe de blocage (18) et le premier organe (12).

8. Dispositif selon l'une quelconque des revendications 1 à 7, caractérisé en ce qu'il comporte deux passages de guidage (63, 64) formé dans ledit premier organe (12) afin de guider et de maintenir deux desdits éléments allongés (11) à l'écartement latéral désiré dans une zone des éléments (11) décalés longitudinalement par rapport à ladite surface de serrage (30), ainsi que des moyens d'enclenchement (67) prévus sur ledit organe d'actionnement (17) et pouvant coopérer avec ledit premier organe (12) dans une zone située latéralement entre lesdits passages de guidage (63, 64) afin de retenir ledit organe d'actionnement (17) dans ladite position de blocage.

9. Dispositif selon l'une ou l'autre des revendications 3 et 4, caractérisé en ce que ladite surface de serrage (30) dudit premier organe (12) présente plusieurs dents (190) situées entre la série de dents citée en premier et ladite série complémentaire de dents (90) de la surface de serrage (30), et qui ne sont pas disposées en arc de cercle autour soit du troisième axe (93), soit du quatrième axe (96), mais réparties le long d'une ligne sensiblement droite entre la première série de dents et ladite série complémentaire de dents (90).

10. Dispositif selon l'une quelconque des revendications 1 à 9, caractérisé en ce que les dents de ladite série complémentaire (90) formées sur ladite surface de serrage en creux (30) sont plus petites que les dents (81) formées sur ledit organe de blocage (18).

FIG. 1

FIG. 3

FIG. 2

FIG. 4

FIG. 5

FIG.6

FIG.10

FIG. 9

FIG. 8

2

FIG. 7

0 148 287